# EUROPÄISCHE PATENTSCHRIFT

(11) **EP 1 141 764 B1**
(45) Veröffentlichungstag und Bekanntmachung des Hinweises auf die Patenterteilung: **29.01.2003**
(21) Anmeldenummer: 99962089.1
(22) Anmeldetag: 27.11.1999
(51) Int. Cl.: G02B 21/16, G02B 21/08

(54) **VERFAHREN ZUR INDIVIDUELLEN ANPASSUNG VON ANREGUNGSINTENSITÄTEN BEI EINEM MULTIBAND-FLUORESZENZ-MIKROSKOP UND MULTIBAND-FLUORESZENZ-MIKROSKOP ZUR DURCHÜHRUNG DES VERFAHRENS**
METHOD FOR THE INDIVIDUAL ADAPTATION OF EXCITATION INTENSITIES IN A MULTIBAND FLUORESCENCE MICROSCOPE AND MULTIBAND FLUORESCENCE MICROSCOPE FOR CARRYING OUT SAID METHOD
PROCEDE D'ADAPTATION INDIVIDUELLE D'INTENSITES D'EXCITATION POUR UN MICROSCOPE PAR FLUORESCENCE MULTIBANDE ET MICROSCOPE PAR FLUORESCENCE MULTIBANDE APPROPRIE POUR METTRE LEDIT PROCEDE EN OEUVRE

(30) Priorität: 17.12.1998 DE 19858206
(43) Veröffentlichungstag der Anmeldung: 10.10.2001
(73) Patentinhaber: Leica Microsystems Wetzlar GmbH, 35578 Wetzlar (DE)
(72) Erfinder: WEISS, Albrecht, D-35440 Linden (DE)
(74) Vertreter: Reichert, Werner F., Dr.
(86) Internationale Anmeldenummer: DE9903768
(87) Internationale Veröffentlichungsnummer: WO00036451

(56) Entgegenhaltungen:
- WO-A-98/45744
- US-A- 5 371 624
- US-A- 5 710 663
- PATENT ABSTRACTS OF JAPAN vol. 1995, no. 03, 28. April 1995 (1995-04-28) -& JP 06 331894 A (OLYMPUS OPTICAL CO LTD), 2. Dezember 1994 (1994-12-02)

## Beschreibung

Die Erfindung betrifft ein Verfahren zur individuellen Anpassung von Anregungsintensitäten bei einem Multiband-Fluoreszenz-Mikroskop und ein Multiband-Fluoreszenz-Mikroskop zur Durchführung des Verfahrens entsprechend den Merkmalen des Oberbegriffs der unabhängigen Ansprüche.

Bei der Multiband-Fluoreszenz-Mikroskopie steht der Anwender häufig vor dem Problem, daß die verschiedenen Fluoreszenzbänder im Mikroskopbild unterschiedliche Intensitäten aufweisen und nicht gleichmäßig sichtbar sind. Die Ursache liegt häufig in den unterschiedlichen Anregungsintensitäten im Beleuchtungsstrahlengang oder auch in der unterschiedlichen Sperrung der Fluoreszenzintensitäten durch ein Sperrfilter im Abbildungsstrahlengang. Auch unterschiedliche Konzentrationen der Fluoreszenz-Farbstoffe für die verschiedenen Anregungsbänder schon beim Anfärben der zu betrachtenden Objekte oder das allmählichen Ausbleichen der Farbstoffe, das sogenannte Fading, führen zu unterschiedlichen Intensitäten der Fluoreszenzbänder im Mikroskopbild. Die unterschiedlichen Intensitäten der Fuoreszenzbänder erweisen sich insbesondere dann als problematisch, wenn das Mikroskop-Bild fotografisch festgehalten werden soll. Dann wird der intensitätsschwache Anteil des Fluoreszenzlichts auf dem Foto zu schwach wiedergegeben oder ist gar nicht sichtbar. Nur möglichst gleiche Intensitäten der Fluoreszenzbänder ermöglichen einwandfreie Fotos des Mikroskop-Bildes.

Die WO 98 45 744 A beschreibt ein Mikroskop zur Wandlung spektraler Informationen einer beleuchteten organischen Probe in ein durch Menschen sichtbares Farbbild. Dabei wird Licht einer vorzugsweise ultraviolettes Licht emittierenden Lichtquelle durch einen oder mehrere Filter, oder Wellenlängen begrenzenden Elemente in verschiedene Komponenten aufgeteilt und durch die Probe geleitet oder von dieser reflektiert und anschließend auf die photosensitive, fluoreszierende Schicht der Linse einer Video-Kamera fokussiert. Durch die Video-Kamera wird das auf deren Linse entstandene Bild dann in elektrische Daten konvertiert, welche durch einen angeschlossenen Computer schließlich, in Rückkopplung mit den Filtern oder Wellenlängen begrenzenden Elementen, in ein sichtbares Farbbild zur Betrachtung an einem Sichtgerät gewandelt werden. Als Filter oder wellenlängenbegrenzende Element zur Anregung von Fluoreszenz in organischen Proben werden Kurzpaß-, Langpaßoder Schmall-Bandfilter oder polarisierende Filter eingesetzt, welche auch in synchronisierter Weise drehbar als Filter-Räder mit mehreren Filtern ausgestaltet sind. Die Filterräder sind nicht geeignet im Betrieb mit mehreren Anregungsbändern als für jedes Anregungsband selektiv wirkendes Filter zu wirken.

Die JP 06 331 894 A beschreibt ein Fluoreszenzmikroskop bei dem gleichzeitig mehrere Anregungsbänder unterschiedlicher Wellenlänge auf die zu untersuchende Probe gerichtet werden und bei dem durch geeignete Dämpfung der Transmission jedes Anregungsbandes die Intensität der zugehörigen Fluoreszenz selektiv verändert werden kann. Dazu wird aus dem Beleuchtungsstrahlengang mittels Totalreflexionsspiegeln Licht in eine Anpassungseinheit ausgekoppelt und durch eine Vielzahl von dichroischen Spiegeln und Interferenzfiltem, welche jeweils einem einzigen Wellenlängenbereich zugeordnet sind, selektiv gedämpft.

Die US 5,371,624 gibt ein Fluoreszenz-Mikroskop mit nur zwei Anregungsbändem an, in dem die Intensitäten der beiden Anregungsbänder abwechselnd beeinflußt werden können. Es enthält einen Beleuchtungsstrahlengang mit einer Lichtquelle und einem Anregungsfilter, das aus dem Licht der Lichtquelle mehrere Anregungsbänder unterschiedlicher Lichtwellenlängen erzeugt. Ferner weist es einen Teilerspiegel, ein Ausgangsfilter (auch als Sperrfilter oder Emissionsfilter bezeichnet) für das Fluoreszenzlicht sowie ein Filterelement zur Beeinflussung der Intensitäten der Anregungsbänder auf.

Das Filterelement kann durch Kippen gegenüber der optischen Achse stufenlos zwischen zwei Endstellungen mit zwei fest vorgegebenen Werten der Transmissionsgrade des einen bzw. des anderen Anregungsbandes umgeschaltet werden. In der einen Endstellung dämpft es nur das erste Anregungsband, in der anderen Endstellung nur das zweite Anregungsband und zwischen den beiden Endstellungen keines der beiden Anregungsbänder. Eine Absenkung des Transmissionsgrads des jeweiligen Anregungsbandes ist nur bis zu dem fest vorgegebenen Wert möglich. Eine Variation zwischen einer maximalen Transmission und einem Wert Null, d.h. bis zu einer vollständigen Unterdrückung eines der beiden Anregungsbänder, ist jedoch nicht möglich. Außerdem können nur zwei Anregungsbänder beeinflußt werden.

Es ist Aufgabe der vorliegenden Erfindung, ein Verfahren zur individuellen Anpassung von Anregungsintensitäten bei einem Multiband-Fluoreszenz-Mikroskop und ein Multiband-Fluoreszenz-Mikroskop zur Durchführung des Verfahrens anzugeben, in welchen wahlweise eines oder mehrere der Anregungsbänder entweder teilweise oder auch vollständig ausgefiltert werden können. Dazu soll der Transmissionsgrad für jedes Anregungsband mit einfachen Mitteln stufenlos einstellbar sein.

Diese Aufgabe wird erfindungsgemäß durch die kennzeichnenden Merkmale der unabhängigen Ansprüche gelöst. Vorteilhafte Ausgestaltungen ergeben sich aus den Merkmalen der Unteransprüche.

Das erfindungsgemäße Verfahren geht von einem bekannten Multiband-Fluoreszenz-Mikroskop aus, in dem in einem Beleuchtungstrahlengang aus dem Licht einer Lichtquelle mithilfe eines Anregungsfilters mehrere Anregungsbänder unterschiedlicher Lichtwellenlängen erzeugt werden. Die Anregungsbänder beleuchten ein mit Fluoreszenz-Farbstoffen präpariertes Fluoreszenz-Objekt und werden von diesem in frequenzverschobene Fluoreszenzbänder umgesetzt.

Erfindungsgemäß werden im Mikroskopbild zunächst die Fluoreszenz-Intensitäten der einzelnen Fluoreszenzbänder bestimmt und mit vorher festgelegten Intensitäts-Sollwerten verglichen. Die Bestimmung der Fluoreszenz-intensitäten kann beispielsweise visuell oder mithilfe eines Intensitätsmessers vorgenommen werden. Dieser kann beispielsweise aus einer Video- oder CCD-Kamera mit nachgeschaltetem Bildanalyse-System bestehen.

Dabei kann für jedes Fluoreszenzband ein anderer Intensitäts-Sollwert festgelegt sein. In der Praxis orientieren sich die Sollwerte aber an konkreten Aufgabenstellungen des Mikroskop-Anwenders. Soll beispielsweise das Mikroskop-Bild entweder fotografisch oder mit einer Videokamera dokumentiert werden und dabei jedes Fluoreszenzband im Foto oder im Video-Bild gleich hell wiedergegeben werden, hängt die Höhe der Sollwerte von der spektralen Empfindlichkeit des Films bzw. der Kamera ab. Daher muß deren spektrale Empfindlichkeit bei der Festlegung der Sollwerte für die verschiedenen Anregungsbänder berücksichtigt werden.

So müssen die gewünschten Sollwerte alle gleich - und zwar gleich der niedrigsten Fluoreszenz-Intensität- sein, sofern der Film oder die Kamera alle Spektralfarben mit gleicher Intensität wiedergibt. Ist die spektrale Empfindlichkeit der Videokamera oder des Films jedoch nicht konstant, so müssen entsprechend unterschiedliche Sollwerte für die verschiedenen Fluoreszenzbänder festgelegt werden, um die Fluoreszenzbänder gleich hell wiedergeben zu können.

Sollen andererseits bestimmte Fluoreszenzbänder auf dem Foto oder dem Videobild nicht erscheinen, also ausgeblendet werden, so müssen für diese die Sollwerte gleich Null sein. Dabei erweist es sich als günstig, wenn zusätzlich für die nicht ausgeblendeten Fluoreszenzbänder die Sollwerte gleich der niedrigsten ihrer Intensitäten sind. Dann erscheinen diese Fluoreszenzbänder alle gleich hell.

Für jedes Anregungsband, das einer von den Sollwerten abweichenden Fluoreszenz-Intensität zugeordnet ist, wird erfindungsgemäß ein auf das betreffende Anregungsband abgestimmtes selektives Filter in den BeleuchtungsStrahlengang gebracht, das Flächenbereiche mit hohen und niedrigen Transmissionsgraden aufweist. Sein spektraler Transmissionsverlaut ist so ausgelegt, daß ausschließlich die Intensität des betreffenden Anregungsbandes reduziert wird, die übrigen Spektralbereiche aber ungehindert durchgelassen werden.

In einem erfindungsgemäßen Multiband-Fluoreszenz-Mikroskop zur Durchführung des erfindungsgemäßen Verfahrens ist ein Filterschieber-Satz aus mehreren einzeln verschiebbaren Filterschiebern dicht neben der Aperturblendenebene senkrecht in den Beleuchtungstrahlengang eingefügt.

Der Aufbau der Filterschieber hängt von der Anzahl der verschiedenen Anregungsbänder des Multiband-Fluoreszenz-Mikroskops ab. Bei einer Anzahl von n Anregungsbändern besitzt jeder Filterschieber n auf die Anregungsbänder abgestimmte, selektive Filter, die Flächenbereiche mit hohen und niedrigen Transmissionsgraden aufweisen.

Die unterschiedlichen Transmissionsgrade werden erzielt, indem nur bestimmte Flächenanteile des Strahlquerschnitts mit separaten Filter-Flächenelementen belegt werden. Dabei wird auf eine möglichst gleichmäßige Flächenbelegung des Strahlquerschnitts geachtet, so daß keine einseitige Abschattung des Strahlquerschnitts und damit auch keine einseitige Ausleuchtung der Pupillen erfolgt. Dadurch wird eine schiefe Beleuchtung und damit ein laterales Wandern der Bildpunkte beim Fokussieren vermieden.

Die Filter müssen unabhängig voneinander einzeln oder kombiniert mit dem gewünschten Flächenbereich bzw. der gewünschten Transmission in den Beleuchtungsstrahlengang einfügbar sein. Dabei müssen bei n Anregungsbändem maximal n-1 Filter miteinander kombinierbar, d.h. gleichzeitig in den Beleuchtungsstrahlengang einfügbar, sein. Dies ist ausreichend, da nie alle Anregungsbänder gleichzeitig gedämpft werden müssen, weil in der Regel ein Anregungsband den Intensitäts-Sollwert liefert und unverändert bleibt. Ebenso müssen nicht alle Anregungsbänder gleichzeitig ausgelöscht werden, da dies einem Abschalten der Beleuchtung gleichkommt.

Um die erforderlichen Kombinationen aus n-1 Filtern zu erzielen, sind in einer vorteilhaften Ausführungsform eines erfindungsgemäßen Multiband-Fluoreszenz-Mikroskops mit n Anregungsbändern auf n-1 Schiebe-Ebenen n-1 einzeln verschiebbare Filterschieber angeordnet, die dicht parallel neben der Aperturblendenebene in geringem Abstand zueinander liegen und in Kombination wirksam sind. Mit jedem Filterschieber kann jeweils ein Filter für ein Anregungsband passend eingestellt werden, so daß insgesamt maximal n-1 Anregungsbänder (eines weniger als die maximale Anzahl) gezielt gedämpft oder ausgelöscht werden können.

Für zwei Anregungsbänder ist es ausreichend, wenn die beiden erforderlichen Filter in einer einzigen Schiebe-Ebene (n-1=1)angeordnet sind, da entweder nur das eine oder nur das andere Filter in den Beleuchtungsstrahlengang eingeschoben werden muß. Daher wird ein Filterschieber-Satz zur Beeinflussung von zwei Anregungsbändem vorzugsweise einteilig, also mit nur einem Filterschieber, aufgebaut. Für mehr als zwei Anregungsbänder muß jedoch ein entsprechend mehrteiliger Fitterschieber-Satz mit n-1 einzeln verschiebbaren Filterschiebern vorgesehen werden.

Außer den selektiven Filtern für die verschiedenen Anregungsbänder weist jeder Filterschieber mindestens eine freie Öffnung mit dem Strahldurchmesser des Beleuchtungsstrahlengangs auf. Dabei ist neben jedem Filter eine freie Öffnung angeordnet. Je nach Ausführungsform können die Filter auch direkt um eine einzige freie Öffnung gruppiert sein. Der Transmissionsgrad der Filter nimmt in Verschieberichtung mit zunehmendem Abstand von der freien Öffnung ab. Jedes Filter weist dabei einen Flächenbereich mit dem geringsten Transmissionsgrad und einem Mindestdurchmesser gleich dem Strahldurchmesser x auf. Wenn dieser Flächenbereich in den Beleuchtungsstrahlengang eingebracht ist, wird das zugehörige Anregungsband maximal, d.h. auf den Wert Null, gedämpft.

Durch richtiges Positionieren jedes einzelnen Filters im Beleuchtungsstrahlengang wird der auf den Beleuchtungsstrahlengang wirksame Transmissionsgrad individuell genau so eingestellt, daß durch Dämpfung des dem Filter zugeordneten Anregungsbandes die daraus resultierende Fluoreszenz-Intensität mit ihrem Intensitäts-Sollwert übereinstimmt. Zur Durchführung dieses Verfahrensschritts sind jedem Filterschieber separate Verstellmittel zugeordnet, die durch Verschieben und/oder Drehen des Filterschiebers das vollständige oder teilweise Überdecken des Beleuchtungsstrahlengangs mit dem geeigneten Flächenbereich des Filterschiebers bewirken. So kann wahlweise die freie Öffnung oder eines oder mehrere der Filter oder Kombinationen aus Filterflächen und der freien Öffnung in den Beleuchtungsstrahlengang eingebracht werden. Wenn dieser letzte Verfahrensschritt für alle Filter und damit alle Anregungsbänder vorgenommen wurde, stimmen alle Fluoreszenz-Intensitäten mit ihren Sollwerten überein.

Auch nach optimaler Einstellung der Fluoreszenz-Intensitäten durch Anwendung des erfindungsgemäßen Verfahrens mithilfe eines angegebenen Multiband-Fluoreszenz-Mikroskops werden nach einiger Zeit wieder Abweichungen der Fluoreszenz-Intensitäten von den Sollwerten auftreten. Dies liegt daran, daß die verschiedenen Fluoreszenz-Farbstoffe für die verschiedenen Anregungsbänder unterschiedlich schnell verblassen, d.h. sie zeigen ein spezifisches Fading.

Daher werden in einer vorteilhaften Ausführung des Verfahrens die zeitlichen Veränderungen der Fluoreszenz-Intensitäten fortlaufend bestimmt. Die im Beleuchtungsstrahlengang wirksamen Transmissionsgrade der Filter werden dann wiederholt in bestimmten zeitlichen Abständen so eingestellt, daß die Fluoreszenz-Intensitäten stets wieder mit ihren Sollwerten zur Übereinstimmung gebracht werden.

Eine besonders vorteilhafte Ausgestaltung des Verfahrens gestattet einen automatischen Fading-Ausgleich. Dazu werden die zeitlichen Veränderungen der Fluoreszenz-Intensitäten automatisch fortlaufend bestimmt. Dazu kann beispielsweise das Mikroskop-Bild automatisch fortlaufend mit einer Video-Kamera aufgenommen und die darin enthaltenen Fluoreszenz-Intensitäten mit einem Bildanalyse-System bestimmt und mit den vorgegebenen Sollwerten verglichen werden.

Dann werden die Transmissionsgrade der Filter automatisch fortlaufend verändert und angepaßt, so daß die Fluoreszenz-Intensitäten stets auf den Intensitäts-Sollwerten gehalten werden. Dazu können beispielsweise motorisch betriebene Verstellmittel eingesetzt werden. Die Ansteuerung der Motoren und Regelung der Fluoreszenz-Intensitäten auf die Sollwerte kann durch eine Elektronik und einen Rechner erfolgen, dem die Signale der Videokamera bzw. des Bildanalyse-Systems zugeführt werden.

Die Erfindung wird im folgenden anhand der schematischen Zeichnung näher erläutert. Es zeigen:
- ***Fig. 1*** :: einen Strahlengang eines erfindungsgemäßen Multiband-Fluoreszenz-Mikroskops;
- ***Fig. 2a-d* :**: verschiedene Ausgestaltungen eines Filterschiebers für ein Zweiband-Fluoreszenz-Mikroskop;
- ***Fig. 2e* :**: den spektralen Transmissionsverlauf der Anregungsbänder und der zugeordneten Filter eines Filterschiebers für ein Zweiband-Fluoreszenz-Mikroskop;
- ***Fig. 3a-c* :**: verschiedene Ausgestaltungen eines Filterschiebers für einen zweiteiligen Filterschieber-Satz eines erfindungsgemäßen Dreiband-Fluoreszenz-Mikroskops;
- ***Fig. 3d* :**: den spektralen Transmissionsverlauf der Anregungsbänder und der zugeordneten Filter eines Filterschiebers für ein Dreiband-Fluoreszenz-Mikroskop;
- ***Fig. 4a-b* :**: verschiedene Ausgestaltungen eines Filterschiebers für einen dreiteiligen Filterschieber-Satz eines erfindungsgemäßen Vierband-Fluoreszenz-Mikroskops;
- ***Fig. 4c* :**: den spektralen Transmissionsverlauf der Anregungsbänder und der zugeordneten Filter eines Filterschiebers für ein Vierband-Fluoreszenz-Mikroskops;

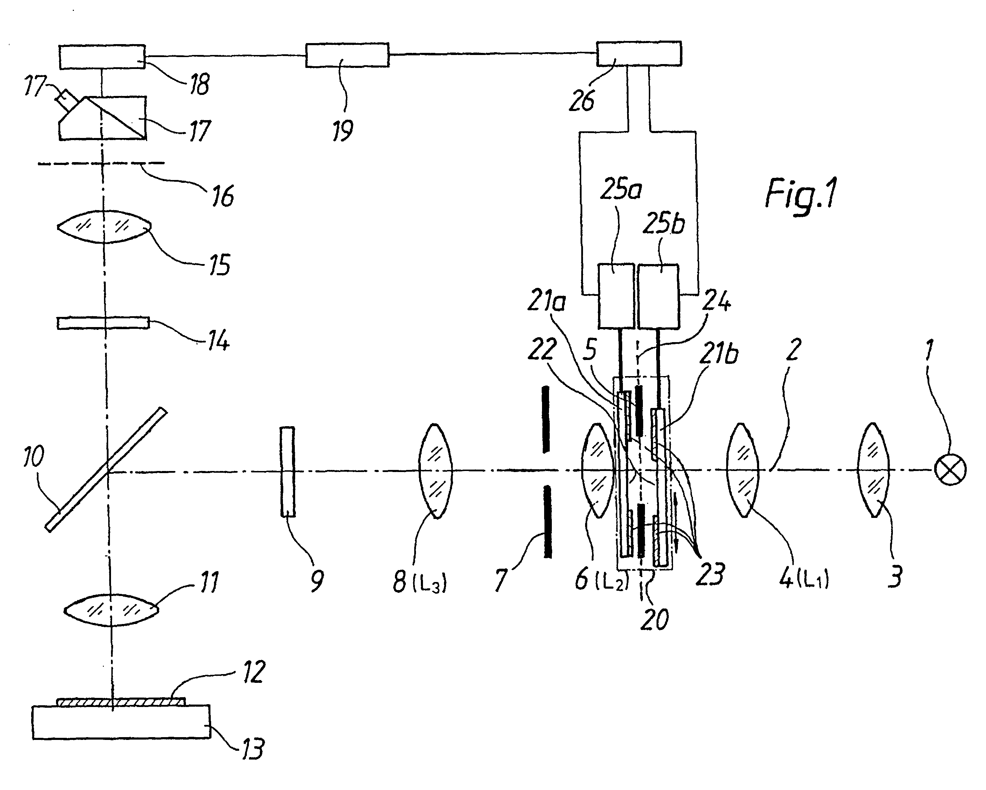

***Fig. 1*** zeigt einen Strahlengang eines erfindungsgemäßen Multiband-Fluoreszenz-Mikroskops zur Durchführung des erfindungsgemäßen Verfahrens. Von einer Lichtquelle 1 geht ein Beleuchtungsstrahlengang mit einer optischen Achse 2 aus, in dem nacheinander ein Kollektor 3, ein erstes Linsenglied 4, eine Aperturblende 5, ein zweites Linsenglied 6, eine Leuchtfeldblende 7, ein drittes Linsenglied 8 und ein Anregungsfilter 9 zur Erzeugung der Anregungsbänder angeordnet sind. Der Beleuchtungsstrahlengang wird an einem Strahlteiler 10 zu einem Objektiv 11 umgelenkt. Er passiert das Objektiv 11 und erreicht ein Fluoreszenz-Objekt 12, das auf einen Objekttisch 13 aufgelegt ist.

Die von dem Anregungsfilter 9 erzeugten Anregungsbänder im Beleuchtungsstrahlengang werden durch Fluoreszenz-Farbstoffe, die in das Fluoreszenz-Objekt 12 eingebracht wurden, in Fluoreszenzbänder umgesetzt und diese von dem Fluoreszenz-Objekt 12 frequenzverschoben emittiert. Dieses Fluoreszenzlicht durchläuft das Objektiv 11, den Strahlteiler 10, ein Ausgangsfilter 14, eine Tubuslinse 15 und erreicht eine Zwischenbildebene 16. Das hier erzeugte Zwischenbild kann von einem Mikroskop-Anwender mit einem Okular 17 betrachtet werden. Über einen TV-Ausgang wird das Zwischenbild zusätzlich auf eine Videokamera 18 mit nachgeschaltetem Bildanalyse-System 19 abgebildet. Mit diesem Aufbau können sowohl visuell über das Okular 17 oder mithilfe des Bildanalyse-Systems 19 die Fluoreszenz-Intensitäten der einzelnen Fluoreszenzbänder im Mikroskopbild bestimmt und mit Intensitäts-Sollwerten größer oder gleich Null verglichen werden.

Zur Dämpfung der Anregungsbänder ist erfindungsgemäß ein Filterschieber-Satz 20 , in diesem Beispiel bestehend aus zwei Filterschiebern 21a und 21b, senkrecht zur optischen Achse 2 des Beleuchtungsstrahlengangs dicht neben, d.h. hinter bzw. vor, der Aperturblendenebene 24 in den Beleuchtungsstrahlengang eingebracht. Auf jedem Filterschieber 21a, 21b sind eine freie Öffnung 22 und daneben mehrere auf die Anregungsbänder abgestimmte, selektive Filter 23 angeordnet. Durch eine möglichst enge Anordnung der Filterschieber 21a, 21b wird erreicht, daß die Filter 23 möglichst dicht neben der Aperturblendenebene 24 liegen. Dadurch wird sichergestellt, daß die eingeschobenen Filterschieber 21a, 21b nicht im Bitd sichtbar werden. Ein weiterer Vorteil ist, daß hier die geringste Strahlaufweitung auftritt, so daß die Flächen der Filter 23 möglichst klein gehalten werden können.

Erfindungsgemäß sind jedem Filterschieber Verstellmittel zugeordnet. Dabei sind in preiswerteren Ausführungsformen auch Verstellmittel mit manueller Verstellmöglichkeit einsetzbar. Motorische Verstellmittel sind zwar teurer, erlauben jedoch eine Automatisierung des erfindungsgemäßen Verfahrens.

In dem hier dargestellten Ausführungsbeispiel sind als Verstellmittel für die Filterschieber 21a, 21b zwei Motoren 25a, 25b angeordnet, welche die Filterschieber 21a, 21b parallel zur Aperturblendenebene 24 verschieben und/oder drehen können. Mittels der Motoren 25a, 25b kann von dem jeweils zugeordneten Filterschieber 21a bzw. 21b entweder die freie Öffnung 22 oder ein selektives Filter 23 oder eine Kombination aus beiden in den Beleuchtungsstrahlengang eingebracht werden. Die Motoren 25a, 25b werden von einer Steuerelektronik 26 angesteuert, die ihr Eingangssignal von dem Bildanalyse-System 19 erhält.

Das Bildanalyse-System 19 ermittelt aus dem Kamera-Signal die Abweichung der Fluoreszenz-intensitäten von ihren Sollwerten. Dann werden diejenigen Anregungsbänder, welche die Sollwert-Abweichungen verursachen, bestimmt und jedem dieser Anregungsbänder wird zur Dämpfung einer der Filterschieber 21a, 21b zugeordnet. In dem dargestellten Beispiel können somit zwei Anregungsbänder vollständig, also auf den Wert Null, oder auch teilweise gedämpft werden. Für jeden Filterschieber 21a, 21b wird ein Ansteuersignal für die zugehörigen Motoren 25a, 25b erzeugt. Jeder Filterschieber 21a, 21b wird mittels des zugehörigen Motors 25a, 25b stufenlos so verschoben, daß ein auf das zugeordnete Anregungsband selektiv wirksames Filter 23 in den Beleuchtungsstrahlengang gebracht wird. Dann wird der Filterschieber 21a bzw. 21 b weiter verschoben, bis ein Flächenbereich des eingefügten Filters 23 mit einem solchen Transmissionsgrad im Beleuchtungsstrahlengang ist, durch den das zugeordnete Anregungsband auf den Intensitäts-Sollwert gedämpft wird. Auf diese Weise werden alle Anregungsbänder auf ihre Intensitäts-Sollwerte eingestellt.

Nachfolgend werden verschiedene Ausgestaltungen des Fllterschieber-Satzes 20 bzw. der Filterschieber 21 und die dazugehörigen spektralen Transmissionsverläufe der darauf angeordneten Filter erläutert.

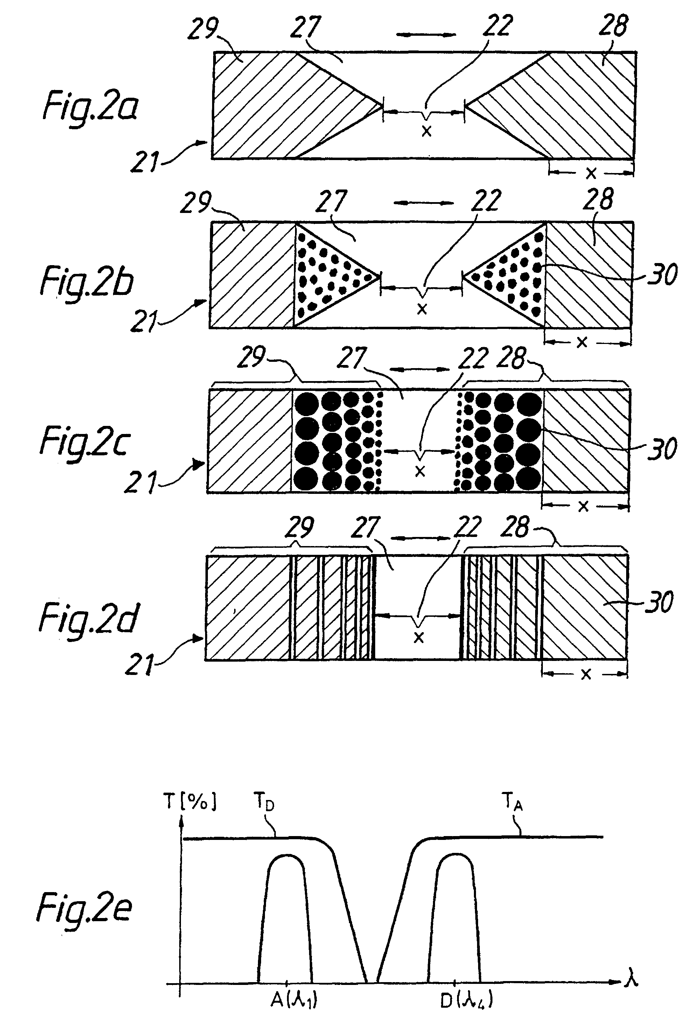

In ***Fig. 2a*** ist ein Filterschieber 21 für ein erfindungsgemäßes Multiband-Fluoreszenz-Mikroskop mit zwei Anregungsbändem A und D dargestellt. Auf einer rechteckigen Glasplatte 27 sind ein Langpaß-Filter 29 zur Intensitäts-Reduzierung des kurzwelligen Anregungsbandes A und ein Kurzpaß-Filter 28 zur Intensitäts-Reduzierung des langwelligen Anregungsbandes D als unterschiedliche Aufdampfschichten aufgebracht. Sie befinden sich an den Enden der Glasplatte 27, dazwischen liegt in der Mitte des Filterschiebers 21 die freie Öffnung 22. Deren Querschnitt ist gleich dem Strahldurchmesser x in der Aperturblende 5 des Beleuchtungsstrahlengangs. Durch hier nicht dargestellte Verstellmittel kann der Filterschieber 21 in Längsrichtung in beiden Richtungen parallel zur Aperturblendenebene 24 stufenlos verschoben werden. Die Bewegung ist durch einen Doppelpfeil angedeutet.

Das Kurzpaß-Filter 28 und das Langpaß-Filter 29 sind in dieser Ausführung jeweils als zusammenhängende Aufdampfschicht aufgebracht. Die Transmission der beiden Filter 28, 29 ist direkt neben der freien Öffnung 22 am größten und nimmt mit dem Abstand von der freien Öffnung 22 ab. Dazu ist neben der freien Öffnung 22 der Filterschieber 21 nicht vollflächig mit den Filtern 28, 29 belegt, sondern der Anteil der Filterflächen nimmt von der freien Öffnung 22 zu den Enden des Filterschiebers 21 zu.

So bilden die Aufdampfschichten an den Enden des Filterschiebers 21 ein Rechteck mit einer Mindestkantenlänge gleich dem Strahldurchmesser x. Wenn diese aufgedampfte Rechteck-Fläche den Beleuchtungsstrahlengang vollflächig abdeckt, ist damit der geringste prozentuale Transmissionsgrad eingestellt und das zugehörige Anregungsband wird vollständig, also auf den Wert Null, gedämpft. An die aufgedampfte Rechteck-Fläche grenzt die Basis einer aufgedampften Dreieck-Fläche, dessen gegenüberliegende Ecke gegen die freie Öffnung 22 weist.

Durch die aufgedampften Dreieck-Flächen, die den Strahldurchmesser stets nur anteilig überdecken, nimmt der Transmissionsgrad des Kurzpaß-Filters 28 und des Langpaß-Filters 29 jeweils in Verschieberichtung von der freien Öffnung 22 zu den Enden des Filterschiebers 21 ab. Durch Einfügen eines beliebigen Flächenanteils des Kurzpaß-Filters 28 oder des Langpaß-Filters 29 läßt sich jeder gewünschte Transmissionsgrad der Filter 28, 29 im Beleuchtungsstrahlengang realisieren und damit das eine oder das andere Anregungsband beliebig abschwächen oder ausblenden.

In ***Fig. 2b*** ist ebenfalls ein Filterschieber 21 für ein erfindungsgemäßes Multiband-Fluoreszenz-Mikroskop mit zwei Anregungsbändem A und D dargestellt. Auf einer rechteckigen Glasplatte 27 sind ein Kurzpaß-Filter 28 zur Filterung des langwelligen Anregungsbandes A und ein Langpaß-Filter 29 zur Filterung des kurzwelligen Anregungsbandes D als unterschiedliche Aufdampfschichten aufgebracht.

Auch hier weisen, wie in ***Fig. 2a***, die Aufdampfschichten in Richtung der freien Öffnung 22 eine dreieckige Kontur auf. Allerdings sind hier die Dreiecke jeweils nicht als zusammenhängende Fläche, sondern als kleine, gleich große Flächenelemente 30 aufgedampft. Dadurch ergibt sich für die beiden Filter 28, 29 ein längerer Verstellbereich mit höheren Transmissionen. An den Enden des Filterschiebers 21 bilden die Aufdampfschichten ein Rechteck mit einer Mindestkantenlänge gleich dem Strahldurchmesser x und damit einen Bereich der geringsten Transmission, mit dem das zugeordnete Anregungsband auf Null gedämpft werden kann.

In ***Fig. 2c*** ist ein weiterer Filterschieber 21 für ein erfindungsgemäßes Multiband-Fluoreszenz-Mikroskop mit zwei Anregungsbändem A und D dargestellt. Auf einer rechteckigen Glasplatte 27 sind ein Kurzpaß-Filter 28 zur Filterung des langwelligen Anregungsbandes A und ein Langpaß-Filter 29 zur Filterung des kurzwelligen Anregungsbandes D als unterschiedliche Aufdampfschichten aufgebracht. Dazwischen befindet sich eine freie Öffnung 22.

Die Filter 28, 29 sind in dieser Ausführung des Filterschiebers 21 neben der freien Öffnung 22 als separate, beliebig geformte (hier kreisförmige) Flächenelemente 30 aufgedampft. Dabei nimmt die Größe der Flächenelemente 30 und damit der Anteil der bedampften Fläche des Filterschiebers 21 von der freien Öffnung 22 zu den Enden des Filterschiebers 21 zu. Neben der freien Öffnung 22 ist der Transmissionsgrad der Filter 28, 29 am größten und nimmt in Verschieberichtung zu den Enden des Filterschiebers 21 ab. An den beiden Enden des Filterschiebers 21 weisen die beiden Filter 28, 29 jeweils eine vollflächig bedampfte Fläche mit dem geringsten Transmissionsgrad auf, die mindestens den Durchmesser x der Strahlengangs hat.

In ***Fig. 2d*** ist ebenfalls ein Filterschieber 21 für ein erfindungsgemäßes Multiband-Fluoreszenz-Mikroskop mit zwei Anregungsbändern A und D dargestellt. Auf einer rechteckigen Glasplatte 27 sind ein Kurzpaß-Filter 28 zur Filterung des langwelligen Anregungsbandes A und ein Langpaß-Filter 29 zur Filterung des kurzwelligen Anregungsbandes D als unterschiedliche Aufdampfschichten aufgebracht. Dazwischen befindet sich eine freie Öffnung 22.

In dieser Ausführungsform sind die Aufdampfschichten als streifenförmige Flächenelemente 30 aufgebracht, wobei die Breite der Streifen von der Mitte zu den Enden des Filterschiebers 21 zunimmt. Dadurch nimmt die Transmission in Verschieberichtung von der freien Öffnung 22 zu den Enden des Filterschiebers 21 ab. Auch hier weisen die beiden Filter 28, 29 an den beiden Enden des Filterschiebers 21 jeweils eine vollflächig bedampfte Fläche mit dem geringsten Transmissionsgrad auf, die mindestens den Durchmesser x der Strahlengangs hat.

In ***Fig. 2e*** sind in Abhängigkeit von der Lichtwellenlänge λ die spektralen Transmissionskurven der kurzwelligen Anregungsbandes A und des langwelligen Anregungsbandes D sowie die Transmissionskurven T_{A}, T_{D} der zugehörigen selektiven Filter, also des Langpaß-Filters für das kurzwellige Anregungsband A und des Kurzpaß-Filters für das langwellige Anregungsband D, dargestellt. Die Filter A und B sind so ausgewählt, daß sie nur selektiv das jeweils zugehörige Anregungsband ausfiltern, jedoch die übrigen Wellenlängenbereiche ungehindert durchlassen.

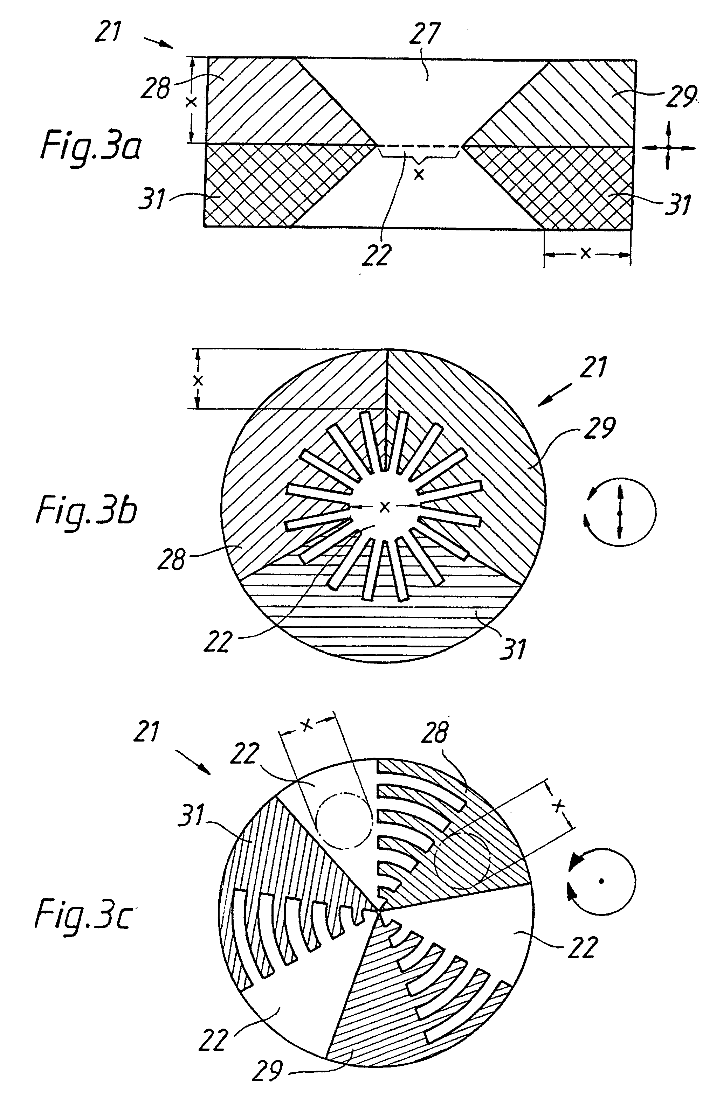

***Fig. 3a*** zeigt einen rechteckigen Filterschieber 21 eines zweiteiligen Filterschieber-Satzes 20 für ein erfindungsgemäßes Multiband-Fluoreszenz-Mikroskop mit drei Anregungsbändern A, B, D. In dieser Ausführungsform besteht der Filterschieber-Satz 20 aus zwei identischen dieser rechteckigen Filterschieber 21, die dicht hintereinander neben der Aperturbfendenebene 24 in den Beleuchtungsstrahlengang eingefügt werden.

In der Mitte des Filterschiebers 21 ist die freie Öffnung 22 mit dem Durchmesser x des Beleuchtungsstrahlengangs 2 vorgesehen. An den beiden Enden des Filterschiebers 21 sind zwei unterschiedliche Kombinationen aus jeweils zwei der drei selektiven Filter 28, 29, 31 für die Anregungsbänder A, B, D als Aufdampfschichten aufgebracht. Die beiden Filter 28, 31 bzw. 29, 31 an einem Ende sind jeweils so nebeneinander angeordnet, daß beide Filter aneinander und an die freie Öffnung 22 angrenzen. Jedes Filter 28, 29, 31 weist dabei einen Bereich der geringsten Transmission mit mindestens dem Durchmesser x des Beleuchtungsstrahlengangs 2 auf. Dadurch besitzt der Filterschieber 21 an seinem kurzen Ende mindestens eine Breite von 2x.

Der Transmissionsgrad der Filter 28, 29, 31 nimmt in der Längsrichtung des Filterschiebers 21, also in der Verschieberichtung, von der freien Öffnung 22 zu den Enden ab. Dies ist in dem hier dargestellten Beispiel realisiert, indem die aufgedampfte Fläche jedes Filters 28, 29, 31 jeweils von der freien Öffnung 22 zum Ende des Filterschiebers 21 zunimmt.

Für jeden der beiden identischen Filterschieber 21 des Filterschieber-Satzes sind separate Verstellmittel 25 zum Verschieben des Filterschiebers 21 parallel zur Aperturblendenebene 24 sowohl in Längsrichtung als auch in Querrichtung vorgesehen. Dadurch ist es möglich, die Filter 28, 29, 31 einzeln oder kombiniert, vollflächig oder mit nur einem Teil ihrer Fläche in den Beleuchtungsstrahlengang einzubringen.

***Fig. 3b*** zeigt einen kreisförmigen Filterschieber 21 eines zweiteiligen Filterschieber-Satzes 20 für ein erfindungsgemäßes Multiband-Fluoreszenz-Mikroskop mit drei Anregungsbändem A, B, D. In dieser vorteilhaften Ausführungsform des erfindungsgemäßen Multiband-Fluoreszenz-Mikroskops besteht der Filterschieber-Satz 20 aus zwei identischen dieser kreisförmigen Filterschieber 21, die dicht hintereinander neben der Aperturblendenebene 24 in den Beleuchtungsstrahlengang eingefügt werden. Auf jedem Filterschieber 21 ist die freie Öffnung 22 in der Mitte vorgesehen. Daran angrenzend sind als aneinander angrenzende, aufgedampfte Kreisringsektoren drei selektive Filter 28, 29, 31 für die Anregungsbänder A, B, D angeordnet.

Die Filter 28, 29, 31 besitzen jeweils einen radial abnehmenden Transmissionsgrad, der neben der freien Öffnung 22 am größten ist. Dies wird beispielsweise dadurch erzielt wird, daß die Filter 28, 29, 31 nicht vollflächig aufgedampft werden. Statt dessen sind neben der freien Öffnung 22 radial breiter zulaufende, aufgedampfte Flächenelemente 30 mit unbedampften Flächenbereichen dazwischen aufgebracht, so daß der Anteil der bedampften Fläche jedes Filters 28,29,31 radial zunimmt.

Mittels separater Verstellmittel (hier nicht dargestellt) kann jeder der beiden identischen Filterschieber 21 des Filterschieber-Satzes 20 einzeln und parallel zur Aperturblendenebene 24 verschoben werden. Er kann dabei entweder lateral in einer Richtung verschoben und zusätzlich gedreht werden (wie in der ***Fig. 3b*** angedeutet) oder alternativ in einer Ebene in zwei Richtungen verschoben werden. Dadurch kann jeder beliebige Flächenanteil des Filterschiebers 21, also z.B. die freie Öffnung 22 oder eines der Filter 28, 29, 31 mit dem gewünschten Transmissionsgrad, in den Beleuchtungsstrahlengang eingebracht werden. Durch die Anordnung zweier gleicher Filterschieber 21 im Beleuchtungsstrahlengang können zwei beliebige der drei Filter 28, 29, 31 gleichzeitig in den Beleuchtungsstrahlengang eingefügt werden, so daß zwei der drei Anregungsbänder gleichzeitig auf die vorbestimmten Sollwerte abgeschwächt bzw. sogar ganz ausgeblendet werden können.

***Fig. 3c*** zeigt eine besonders vorteilhafte Ausführungsform eines Filterschiebers 21 für einen zweiteiligen Filterschieber-Satz 20 eines erfindungsgemäßen Multiband-Fluoreszenz-Mikroskops mit drei Anregungsbändern A, B, D. In dieser Ausführungsform des erfindungsgemäßen Multiband-Fluoreszenz-Mikroskops besteht der Filterschieber-Satz 20 aus zwei identischen dieser kreisförmigen Filterschieber 21, die dicht hintereinander neben der Aperturblendenebene 24 in den Beleuchtungsstrahlengang eingefügt werden.

Die Filter 28, 29, 31 für die Anregungsbänder A, B, D sind auf dem Filterschieber 21 so vorteilhaft angeordnet, daß er nur gedreht, aber nicht verschoben werden muß (Drehbewegung ist angedeutet). Das vereinfacht den Aufbau der mechanischen oder auch motorischen Verstellmittel, die jedem der beiden Filterschieber 21 separat zugeordnet sind (hier nicht dargestellt).

Um dies zu erreichen, ist jeder Filterschieber 21 kreisförmig aufgebaut, in sechs Sektoren gegliedert und um seine Mitte drehbar gelagert. Die Kreismitte liegt außerhalb des Beleuchtungsstrahlengangs. Jeder Sektor kann durch Drehen des Filterschiebers 21 in den Beleuchtungsstrahlengang eingeschwenkt werden und ihn voll abdecken. Der Strahlquerschnitt mit dem Durchmesser x ist eingezeichnet.

Jeder zweite Sektor ist eine freie Öffnung 22. Dazwischen ist jeweils eines der drei Filter 28, 29, 31 für die drei Anregungsbänder A, B, D aufgebracht, z.B. aufgeklebt oder aufgedampft. Jedes Filter 28, 29, 31 weist innerhalb seines Kreissektors in einer der beiden Drehrichtungen einen Anstieg des Transmissionsgrads, beispielsweise durch unterschiedliche Flächenbelegung mit aufgedampften Flächenelementen, auf. Dadurch besitzt jedes Filter 28, 29, 31 neben der einen benachbarten freien Öffnung 22 einen maximalen Transmissionsgrad und neben der anderen benachbarten freien Öffnung 22 einen minimalen Transmissiongrad. Durch Drehen des Filterschiebers 21 kann eine der freien Öffnungen 22 oder eines der Filter 28, 29, 31 mit der gewünschten Transmission oder eine Kombination aus beiden in den Beleuchtungsstrahlengang eingebracht werden. Der Einsatz von zwei identischen Filterschiebem 21 als Filterschieber-Satz ermöglicht es, bis zu zwei der drei Anregungsbänder A, B, D gleichzeitig und unabhängig von einander auf den gewünschten Sollwert zu dämpfen.

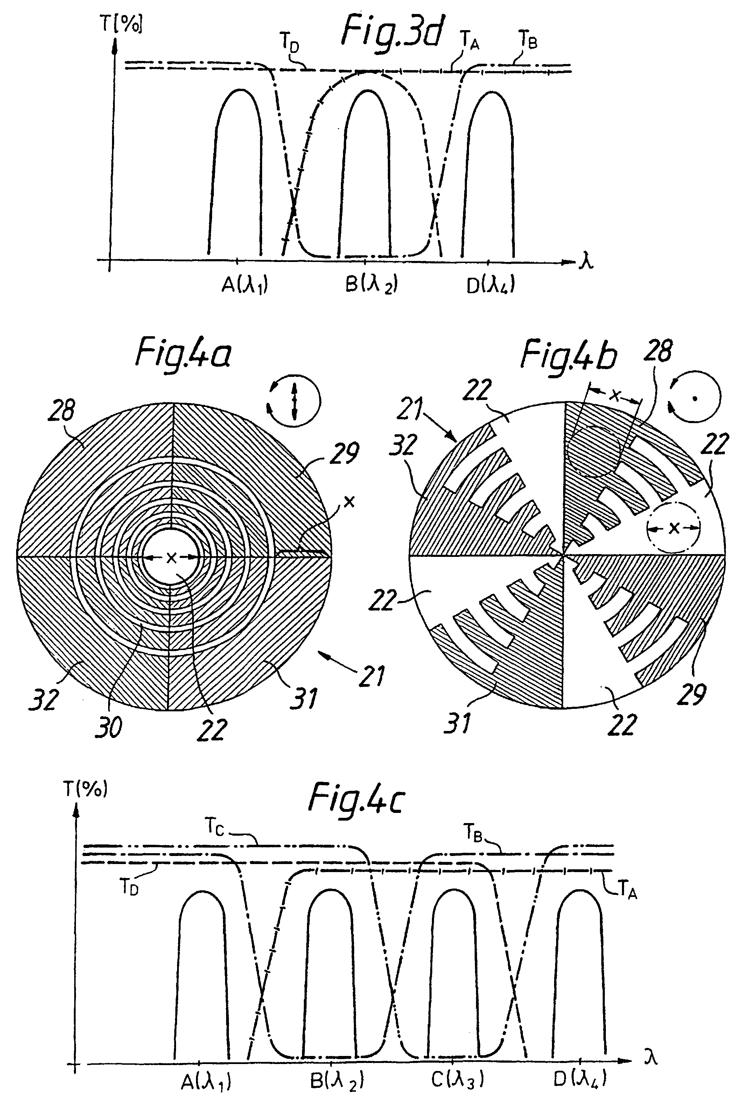

***Fig. 3d*** zeigt in Abhängigkeit von der Lichtwellenlänge λ die spektralen Transmissionskurven des kurzwelligen Anregungsbandes A, des langwelligen Anregungsbandes D und eines dazwischenliegenden Anregungsbandes B. Weiterhin sind die Transmissionskurven T_{A}, T_{B}, T_{D} der zugehörigen selektiven Filter, also des Langpaß-Filters für das kurzwellige Anregungsband A, des Kurzpaß-Filters für das langwellige Anregungsband D und eines selektiven Filters für das Anregungsband B, dargestellt. Die Filter sind so ausgewählt, daß sie nur selektiv das zugehörige Anregungsband ausfiltem, jedoch die übrigen Wellenlängenbereiche ungehindert durchlassen.

***Fig. 4a*** zeigt einen kreisförmigen Filterschieber 21 für einen dreiteiligen Filterschieber-Satz 20 eines erfindungsgemäßen Multiband-Fluoreszenz-Mikroskops mit vier Anregungsbändern A, B, C, D. In dieser Ausführungsform des erfindungsgemäßen Multiband-Fluoreszenz-Mikroskops besteht der Filterschieber-Satz 20 aus drei identischen dieser kreisförmigen Filterschieber 21, die dicht hintereinander neben der Aperturblendenebene 24 in den Beleuchtungsstrahlengang eingefügt werden. Jeder Filterschieber 21 weist in der Mitte eine freie Öffnung 22 auf. Daneben sind als aneinander angrenzende Kreisringsektoren vier selektive Filter 28, 29, 31, 32 für die Anregungsbänder A, B, C, D aufgedampft.

Der Transmissiongrad der Filter 28, 29, 31, 32 nimmt radial ab und ist neben der freien Öffnung 22 am größten. Dies wird beispielsweise dadurch erzielt, daß die Filter 28, 29, 31, 32 nicht vollflächig, sondern als ringförmige Flächenelemente 30 mit unbedampften Flächen dazwischen aufgedampft werden, wodurch der Anteil der bedampften Fläche jedes Filters 28, 29, 31, 32 radial zunimmt.

Jedem der drei Filterschieber 21 des Filterschieber-Satzes 20 sind separate Verstellmittel (hier nicht dargestellt) zugeordnet. Mithilfe dieser Verstellmittel kann jeder Filterschieber 21 einzeln und parallel zur Aperturblendenebene 24 verschoben werden. Er kann dabei entweder lateral in einer Richtung verschoben und zusätzlich gedreht werden (wie in der ***Fig. 4a*** angedeutet) oder alternativ in einer Ebene in zwei Richtungen verschoben werden.

Dadurch kann jeder beliebige Flächenanteil des Filterschiebers 21, also z.B. die freie Öffnung 22 oder ein beliebiger Flächenanteil der Filter 28, 29, 31, 32, in den Beleuchtungsstrahlengang eingebracht werden. Durch die Anordnung von drei gleichen Filterschiebern 21 im Beleuchtungsstrahlengang können drei beliebige der vier Filter 28, 29, 31, 32 gleichzeitig in den Beleuchtungsstrahlengang eingefügt werden. Damit können gleichzeitig bis zu drei der vier Anregungsbänder A, B, C, D auf die vorbestimmten Sollwerte abgeschwächt bzw. sogar ganz ausgeblendet werden.

***Fig. 4b*** zeigt eine besonders vorteilhafte Ausführungsform eines Filterschiebers 21 für einen dreiteiligen Filterschieber-Satz 20 für ein erfindungsgemäßes Multiband-Fluoreszenz-Mikroskop mit vier Anregungsbändern A, B, C, D. In dieser Ausführungsform des erfindungsgemäßen Multiband-Fluoreszenz-Mikroskops besteht der Filterschieber-Satz 20 aus drei identischen dieser kreisförmigen Filterschieber 21, die dicht hintereinander neben der Aperturblendenebene 24 in den Beleuchtungsstrahlengang eingefügt werden.

Die Filter 28, 29, 31, 32 für die Anregungsbänder A, B, C, D sind auf dem Filterschieber 21 so vorteilhaft angeordnet, daß er nur gedreht, aber nicht verschoben werden muß (Drehbewegung ist angedeutet). Das vereinfacht den Aufbau der mechanischen oder auch motorischen Verstellmittel, die jedem der drei Filterschieber 21 separat zugeordnet sind (hier nicht dargestellt).

Dies wird dadurch erzielt, daß jeder Filterschieber 21 kreisförmig aufgebaut, in acht Sektoren gegliedert und um seine Mitte drehbar gelagert ist. Die Kreismitte liegt außerhalb des Beleuchtungsstrahlengangs. Durch Drehen des Filterschiebers 21 kann jeder Sektor ganz oder teilweise mit dem Beleuchtungsstrahlengang zur Deckung gebracht werden. Der Strahlquerschnitt mit dem Durchmesser x ist eingezeichnet.

Jeder zweite Sektor ist eine freie Öffnung 22 . Dazwischen ist jeweils eines der vier Filter 28, 29, 31, 32 für die drei Anregungsbänder A, B, C, D aufgebracht, z.B. aufgeklebt oder aufgedampft. Jedes Filter 28, 29, 31, 32 weist innerhalb seines Kreissektors in einer der beiden Drehrichtungen einen Anstieg des Transmissionsgrads, beispielsweise durch unterschiedliche Flächenbelegung, auf. Dadurch besitzt jedes Filter 28, 29, 31, 32 neben der einen benachbarten freien Öffnung 22 einen maximalen Transmissionsgrad und neben der anderen benachbarten freien Öffnung 22 einen minimalen Transmissiongrad.

Durch Drehen des Filterschiebers 21 kann eine der freien Öffnungen 22 oder eines der Filter 28, 29, 31, 32 mit der gewünschten Transmission oder eine Kombination aus beiden in den Beleuchtungsstrahlengang eingebracht werden. Durch den Einsatz von drei Filterschiebern 21 können bis zu drei der vier Anregungsbänder A, B, C, D gleichzeitig und unabhängig von einander auf den gewünschten Sollwert gedämpft werden.

In ***Fig. 4c*** sind in Abhängigkeit von der Lichtwellenlänge λ die spektralen Transmissionskurven der kurzwelligen Anregungsbandes A, des langwelligen Anregungsbandes D und zweier dazwischen liegender Anregungsbänder B und C dargestellt. Weiterhin sind die Transmissionskurven T_{A}, T_{B}. T_{C}, T_{D} der zugehörigen selektiven Filter, also des Langpaß-Filters für das kurzwellige Anregungsband A, des Kurzpaß-Filters für das langwellige Anregungsband D, eines selektiven Filters für das Anregungsband B und eines selektiven Filters für das Anregungsband C, angegeben. Die Filter A, B, C, D sind so ausgewählt, daß sie nur selektiv das jeweils zugehörige Anregungsband ausfiltem, jedoch die übrigen Wellenlängenbereiche ungehindert durchlassen.

Für mehr als vier Anregungsbänder muß der Filterschieber-Satz 20 entsprechend erweitert werden. Allerdings wird es dann zunehmend schwieriger, die einzelnen Filter nahe genug neben der Aperturblende 5 unterzubringen.

### Bezugszeichenliste

- 1: Lichtquelle
- 2: optische Achse des Beleuchtungsstrahlengangs
- 3: Kollektor
- 4: erstes Linsenglied
- 5: Aperturblende
- 6: zweites Linsenglied
- 7: Leuchtfeldblende
- 8: drittes Linsenglied
- 9: Anregungsfilter
- 10: Strahlteiler
- 11: Objektiv
- 12: Fluoreszenz-Objekt
- 13: Objekttisch
- 14: Ausgangsfilter
- 15: Tubuslinse
- 16: Zwischenbildebene
- 17: Okular an Tubus (17')
- 18: Videokamera
- 19: Bildanalyse-System
- 20: Filterschieber-Satz
- 21: Filterschieber (auch 21a, 21b)
- 22: freie Öffnung
- 23: selektive(s) Filter
- 24: Aperturblendenebene
- 25: Verstellmittel (25a, 25b Motoren)
- 26: Steuerelektronik
- 27: Glasplatte
- 28: Kurzpaß-Filter für das langwellige Anregungsband D(λ₄)
- 29: Langpaß-Filter für das kurzwellige Anregungsband A(λ₁)
- 30: Flächenelement(e)
- 31: subtraktives Filter zu Anregungsband B(λ₂)
- 32: subtraktives Filter zu Anregungsband C(λ₃)
- x: Strahldurchmesser in der Aperturblendenebene 24

## Patentansprüche

1. Verfahren zur individuellen Anpassung von Anregungsintensitäten bei einem Multiband-Fluoreszenz-Mikroskop mit mehreren spektral verschiedenen Anregungsbändern, die von einem Fluoreszenz-Objekt (12) gleichzeitig in Fluoreszenzbänder mit Fluoreszenz-Intensitäten umgesetzt werden,
**dadurch gekennzeichnet, daß**
a) die Fluoreszenz-Intensitäten der einzelnen Fluoreszenzbänder im Mikroskopbild bestimmt und mit Intensitäts-Sollwerten, die als größer oder gleich Null vorgegeben werden können, verglichen werden,
b) für jedes Anregungsband, das einer von den Intensitäts-Sollwerten abweichenden Fluoreszenz-Intensität zugeordnet ist, ein selektives Filter (23; 28, 29, 31, 32) in den Beleuchtungsstrahlengang gebracht wird, das Flächenbereiche mit hohen und niedrigen Transmissionsgraden aufweist,
c) und die im Beleuchtungsstrahlengang wirksamen Transmissionsgrade der einzelnen Filter (23; 28, 29, 31, 32) stufenlos so eingestellt werden, daß durch Dämpfung der zugehörigen Anregungsbänder alle Fluoreszenz-Intensitäten auf ihre Intensitäts-Sollwerte eingestellt werden.

2. Verfahren nach Anspruch 1,
**dadurch gekennzeichnet, daß**
die Sollwerte für die verschiedenen Fluoreszenz-Intensitäten alle gleich der niedrigsten Fluoreszenz-Intensität sind.

3. Verfahren nach Anspruch 1,
**dadurch gekennzeichnet, daß**
mindestens einer der Sollwerte für die verschiedenen Fluoreszenz-Intensitäten gleich Null ist.

4. Verfahren nach Anspruch 1,
**dadurch gekennzeichnet, daß**
für einige Fluoreszenz-Intensitäten die Sollwerte gleich Null sind und für die übrigen gleich der niedrigsten Fluoreszenz-Intensität sind.

5. Verfahren nach Anspruch 1,
**dadurch gekennzeichnet, daß**
die verschiedenen Fluoreszenz-Intensitäten visuell bestimmt werden.

6. Verfahren nach Anspruch 1,
**dadurch gekennzeichnet, daß**
die verschiedenen Fluoreszenz-Intensitäten mit einem Intensitätsmesser bestimmt werden.

7. Verfahren nach Anspruch 6,
**dadurch gekennzeichnet, daß**
die verschiedenen Fluoreszenz-Intensitäten mittels einer CCD- oder einer Video-Kamera (18) mit nachgeschaltetem Bildanalyse-System (19) bestimmt werden.

8. Verfahren nach Anspruch 1,
**dadurch gekennzeichnet, daß**
a) Veränderungen der Fluoreszenz-Intensitäten fortlaufend bestimmt werden,
b) und durch wiederholte Anpassung der im Beleuchtungsstrahlengang wirksamen Transmissionsgrade der Filter (23; 28, 29, 31, 32) die Fluoreszenz-Intensitäten stets wieder auf ihre Sollwerte gebracht werden.

9. Verfahren nach Anspruch 2,
**dadurch gekennzeichnet, daß**
a) Veränderungen der Fluoreszenz-Intensitäten automatisch fortlaufend bestimmt werden,
b) und durch automatisch fortlaufende Anpassung der im Beleuchtungsstrahlengang wirksamen Transmissionsgrade der Filter (23, 28, 29, 31, 32) die Fluoreszenz-Intensitäten stets auf ihren Sollwerten gehalten werden.

10. Multiband-Fluoreszenz-Mikroskop zur Ausübung des Verfahrens nach Anspruch 1, enthaltend einen Beleuchtungsstrahlengang mit einer Lichtquelle (1), einem Kollektor (3), mehreren Linsengliedern (4, 6, 8), einer Aperturblende (5), einer Leuchtfeldblende (7), einem Anregungsfilter (9) zur gleichzeitigen Erzeugung mehrerer Anregungsbänder unterschiedlicher Lichtwellenlängen sowie einem Filterelement zur Beeinflussung dieser Anregungsbänder, ferner enthaltend einen Strahlteiler (10) und ein Objektiv (11), das den Beleuchtungsstrahl auf ein auf einem Objekttisch (13) liegendes Fluoreszenz-Objekt (12) richtet, welches über den Strahlteiler (10), ein Ausgangsfilter (14) und eine Tubuslinse (15) in eine Zwischenbildebene (16) abgebildet wird,
**dadurch gekennzeichnet, daß**
a) als Filterelement ein Filterschieber-Satz (20) aus einzeln verschiebbaren, dicht beabstandeten Filterschiebern (21; 21a, 21b) dicht neben der Aperturblende (5) senkrecht in den Beleuchtungsstrahlengang eingefügt ist,
b) auf jedem Filterschieber (21) für jedes Anregungsband ein selektives Filter (23; 28, 29, 31, 32) vorgesehen ist, das Flächenbereiche mit hohen und niedrigen Transmissionsgraden aufweist,
c) zum vollständigen Löschen des Anregungsbandes der Flächenbereich mit dem niedrigsten Transmissionsgrad einen Mindestdurchmesser gleich dem Strahldurchmesser (x) aufweist,
d) neben jedem Filter (23; 28, 29, 31, 32) eine freie Öffnung (22) mit dem Strahldurchmesser (x) angeordnet ist,
e) der Transmissionsgrad jedes Filters (23; 28, 29, 31, 32) in Verschieberichtung mit dem Abstand von der freien Öffnung (22) abnimmt,
f) und jedem Filterschieber (21) separate Verstellmittel (25) zugeordnet sind, mit denen ein beliebiger Flächenbereich des Filterschiebers (21) in den Beleuchtungsstrahlengang eingebracht werden kann.

11. Fluoreszenz-Mikroskop nach Anspruch 10,
**dadurch gekennzeichnet, daß**
zur Beeinflussung einer Anzahl n Anregungsbänder
a) der Filterschieber-Satz (20) aus n-1 Filterschiebern (21) auf separaten, dicht beabstandeten n-1 Schiebe-Ebenen parallel zur Aperturblendenebene (24) besteht,
b) jeder Filterschieber (21) mindestens eine freie Öffnung (22) und n selektive Filter (23; 28, 29, 31, 32) für die n Anregungsbänder aufweist.

12. Fluoreszenz-Mikroskop nach Anspruch 10,
**dadurch gekennzeichnet, daß**
zur Beeinflussung zweier Anregungsbänder A, D ein einzelner Filterschieber (21) vorgesehen ist,
a) der an seinem einen Ende ein Langpaß-Filter (29) zur Intensitätsabschwächung des kürzerwelligen Anregungsbandes A,
b) an seinem anderen Ende ein Kurzpaß-Filter (28) zur Intensitätsabschwächung des längerwelligen Anregungsbandes D,
c) und dazwischen die freie Öffnung (22) aufweist,
d) sowie Verstellmittel (25) zum kontinuierlichen Verschieben des Filterschiebers (21) parallel zur Aperturblendenebene (24) angebracht sind.

13. Fluoreszenz-Mikroskop nach Anspruch 12,
**dadurch gekennzeichnet, daß**
a) der Filterschieber (21) eine lichtdurchlässige, rechteckige Glasplatte (27) aufweist, an deren Enden einander gegenüberliegend das Kurzpaß-Filter (28) und das Langpaß-Filter (29) als Aufdampfschichten aufgebracht sind,
b) und das Kurzpaß-Filter (28) und das Langpaß-Filter (29) jeweils in Verschieberichtung von der freien Öffnung (22) zu den Enden des Filterschiebers (21) einen zunehmenden Anteil der bedampften Glasoberfläche und dadurch eine abnehmende Transmission aufweist.

14. Fluoreszenz-Mikroskop nach Anspruch 13,
**dadurch gekennzeichnet, daß**
die Flächen der beiden Aufdampfschichten an den Enden des Filterschiebers (21) jeweils die Form eines Rechtecks mit einer Mindestkantenlänge gleich dem Strahldurchmesser (x) haben, an die in Richtung der freien Öffnung (22) die Basis einer aufgedampften, gleichschenkligen Dreieck-Fläche angrenzt.

15. Fluoreszenz-Mikroskop nach Anspruch 13,
**dadurch gekennzeichnet, daß**
die Aufdampfschichten ganz oder teilweise als nicht zusammenhängende Fläche, sondern als Flächenelemente (30) aufgebracht sind, deren Größe oder Abstände in Verschieberichtung von der freien Öffnung (22) zu den Enden hin unterschiedlich gewählt sind.

16. Fluoreszenz-Mikroskop nach Anspruch 10,
**dadurch gekennzeichnet, daß**
zur Beeinflussung von drei Anregungsbändern A, B, D ein zweiteiliger Filterschieber-Satz (20) aus zwei kreisförmigen Filterschiebern (21) vorgesehen ist, wobei
a) jeder Filterschieber (21) eine kreisförmige freie Öffnung (22) in der Mitte aufweist,
b) darum herum als drei Kreisringsektoren drei selektive Filter (28, 29, 31) für die Anregungsbänder A, B, D mit radial abnehmendem Transmissionsgrad angeordnet sind,
c) und jedem Filterschieber (21) separate Verstellmittel (25) zugeordnet sind, mit denen die Filterschieber (21) unabhängig voneinander parallel zur Aperturblendenebene (24) verschoben und/oder gedreht werden können.

17. Fluoreszenz-Mikroskop nach Anspruch 16,
**dadurch gekennzeichnet, daß**
zur Erzielung eines radial abnehmenden Transmissionsgrads der Anteil der bedampften Fläche der Filter (28, 29, 31) radial zunimmt.

18. Fluoreszenz-Mikroskop nach Anspruch 10,
**dadurch gekennzeichnet, daß**
zur Beeinflussung von drei Anregungsbändern A, B, D ein zweiteiliger Filterschieber-Satz (20) aus zwei kreisförmigen Filterschiebern (21) vorgesehen ist, wobei
a) jeder Filterschieber (21) in sechs, den Beleuchtungsstrahlengang abdeckende Kreissektoren gegliedert und um seine außerhalb des Strahlengangs gelegene Mitte drehbar gelagert ist,
b) jeder zweite Kreissektor eine freie Öffnung (22) ist und dazwisphen jeweils eines der drei selektiven Filter (28, 29, 31) für die Anregungsbänder A, B, D liegt,
c) jedes Filter (28, 29, 31) innerhalb seines Kreissektors in einer der beiden Drehrichtungen einen Anstieg des Transmissionsgrads aufweist,
d) und separate Verstellmittel (25) zum Drehen jedes Filterschiebers (21) um seine Mitte und parallel zur Aperturblendenebene (24) vorgesehen sind.

19. Fluoreszenz-Mikroskop nach Anspruch 10,
**dadurch gekennzeichnet, daß**
zur Beeinflussung von drei Anregungsbändern A, B, D ein zweiteiliger Filterschieber-Satz (20) aus zwei rechteckigen Filterschiebern (21) vorgesehen ist, wobei
a) jeder Filterschieber (21) in der Mitte eine freie Öffnung (22) und an seinen beiden Enden zwei unterschiedliche Kombinationen aus jeweils zwei der drei selektiven Filter (28, 29, 31) für die Anregungsbänder aufweist wobei die beiden Filteran einem Ende jeweils so nebeneinander angeordnet sind, daß beide Filter aneinander und an die freie Öffnung (22) angrenzen,
b) der Transmissionsgrad der Filter (28, 29, 31) in der Längsrichtung des Filterschiebers (21) von der freien Öffnung (22) zu den Enden abnimmt,
c) und separate Verstellmittel (25) zum Verschieben des Filterschiebers (21) parallel zur Aperturblendenebene (24) sowohl in Längsrichtung als auch in Querrichtung angeordnet sind.

20. Fluoreszenz-Mikroskop nach Anspruch 10,
**dadurch gekennzeichnet, daß**
zur Beeinflussung von vier Anregungsbändern A, B, C, D ein dreiteiliger Filterschieber-Satz (20) aus drei kreisförmigen Filterschiebem (21) vorgesehen ist, wobei
a) jeder Filterschieber (21)in der Mitte eine freie Öffnung (22) und darum herum vier selektive Filter (28, 29, 31, 32) für die Anregungsbänder als aneinander angrenzende, aufgedampfte Kreisringsektoren mit radial abnehmendem Transmissionsgrad aufweist
b) und separate Verstellmittel (25) zum Verschieben und/oder Drehen jedes Filterschiebers (21) parallel zur Aperturblendenebene (24) vorgesehen sind.

21. Fluoreszenz-Mikroskop nach Anspruch 10,
**dadurch gekennzeichnet, daß**
zur Beeinflussung von vier Anregungsbändern A, B, C, D ein dreiteiliger Filterschieber-Satz (20) aus drei kreisförmigen Filterschiebem (21) vorgesehen ist, wobei
a) jeder Filterschieber (21) in acht, den Beleuchtungsstrahlengang abdeckende Kreissektoren gegliedert und um seine außerhalb des Strahlengangs gelegene Mitte drehbar gelagert ist,
b) jeder zweite Kreissektor eine freie Öffnung (22) ist und dazwischen jeweils eines der vier selektiven Filter (28, 29, 31, 32) für die Anregungsbänder liegt,
c) jedes Filter (28, 29, 31, 32) innerhalb seines Kreissektors in einer der beiden Drehrichtungen einen Anstieg des Transmissionsgrads aufweist,
d) und separate Verstellmittel (25) zum Drehen jedes Filterschiebers (21) um seine Mitte und parallel zur Aperturblendenebene (24) vorgesehen sind.

## Claims

1. A method for the individual adaptation of excitation intensities in a multiband fluorescence microscope having several spectrally different excitation bands that are simultaneously converted from an fluorescence object (12) into fluorescence bands having fluorescence intensities, wherein :
a) the fluorescence intensities of the individual fluorescence bands in the microscopic image are determined and compared to intensity setpoint values which can be pretended being larger than or equal to zero,
b) for each excitation band that is assigned to a fluorescence intensity deviating from the intensity setpoint values, a selective filter (23; 28,29, 3 1, 32) is brought into the illumination beam path., the filter comprising surface zones with high and low transmission factors,
c) and the transmission factors of the individual filters (23; 28,29,31, 32) in effect in the illumination beam path are continuously adjusted so that by attenuating the associated excitation bands, all fluorescence intensities are adjusted to their intensity setpoint values.

2. The method as recited in Claim 1, wherein the setpoint values for the different fluorescence intensities are all equal to the lowest fluorescence intensity.

3. The method as recited in Claim 1, wherein at least one of the setpoint values for the different fluorescence intensities is equal to zero.

4. The method as recited in Claim 1, wherein for some fluorescence intensities the setpoint values are equal to zero and for the rest are equal to the lowest fluorescence intensities.

5. The method as recited in Claim 1, wherein the different fluorescence intensities are visually determined.

6. The method as recited in Claim 1, wherein the different fluorescence intensities are determined using an intensity meter

7. The method as recited in Claim 6, wherein the different fluorescent intensities are determined using a CCD or a video camera (1 8) having an image analysis system (19).

8. The method as recited in Claim 1, wherein
a) modifications of the fluorescence intensities are continuously determined,
and
b) by repeated adaptation of the transmission factors of the filters (23; 28,29, 3 1, 32) in effect in the illumination beam path, the fluorescence intensities are always brought back to their setpoint values.

9. The method as recited in Claim 2, a wherein
a) modifications of the fluorescence intensities are automatically continuously determined,
b) and by automatic continuous adaptation of the transmission factors of the filters (23; 28,29, 3 1 , 32) in effect in the illumination beam path, the fluorescence intensities are always kept at their setpoint values.

10. A multiband fluorescence microscope for utilising the method as recited in Claim 1, including an illumination beam path having a light source (1), a collector (3), a multiplicity of lens members (4,6, 8), an aperture diaphragm (5), a radiant field diaphragm (7), an excitation filter (9) for simultaneous production of several excitation bands of different light wavelengths and a filter element to affect these excitation bands, also including a beam splitter (10) and an objective (11) that directs the illumination beam path onto a fluorescence object (12) on a specimen stage (13) and projects it through the beam splitter (10), an output filter (14) and a tube lens (1 5) into an intermediate image plane (16),
wherein
a) Filter draw assembly (20) made of individually movable, tightly spaced filter draws (21; 21a, 21b) is inserted perpendicular in the illumination beam path tightly next to the aperture diaphragm (5),
b) a selective filter (23; 28,29,31,32) is provided on each filter draw (21) for each excitation band that has surface regions with high and low transmission factors,
c) the surface region having the lowest transmission factor has a minimum diameter equal to the beam diameter (x) to completely cancel the excitation band,
d) a blank aperture (22) having the beam diameter (x) is arranged next to each filter (23; 28,29, 3 1 , 32),
e) the transmission factor of each filter (23; 28,29, 3 1 , 32) diminishes as one moves further away from the blank aperture (22),
f) and separate positioning means (25), with which any surface region of the filter draw (21) can be inserted in the illumination beam path, are assigned to each filter draw (21).

11. The fluorescence microscope as recited in Claim 10,
wherein
to affect a number n of excitation bands
a) the filter draw assembly (20) consists of n-1 filter draws (21) on separate, tightly spaced n- 1 layered planes parallel to the aperture diaphragm plane (24),
b) each filter draw (21) has at least one blank aperture (22) and n selective filters (23; 28, 29, 31, 32) for the n excitation bands.

12. The fluorescence microscope as recited in Claim 10,
wherein
to affect two excitation bands A, D a single filter draw (21) is provided,
a) that has on its one end a long-pass filter (29) to weaken the intensity of the short-wave excitation band A,
b) that has on its other end a short-pass filter (28) to weaken the intensity of the long-wave excitation band D,
c) and has the blank aperture (22) in between them,
d) and positioning means (25) for continually shifting the filter draw (21) are mounted parallel to the aperture diaphragm plane (24).

13. The fluorescence microscope as recited in Claim 1 2,
wherein
a) the filter draw (21) has a transparent, rectangular glass plate (27) on whose ends the short-pass filter (28) and the long-pass filter (29) applied as vapor deposition layers are opposite one another,
b) and the short-pass filter (28) and the long-pass filter (29) each have an increasing portion of the vapor-deposited glass surface, and as a result a decreasing transmission as one moves from the blank aperture (22) toward the ends of the filter draw (21).

14. The fluorescence microscope as recited in Claim 13,
wherein
the areas of the two vapor-deposition layers at the ends of the filter draw (21) each have the form of a rectangle having a minimum edge length equal to the beam diameter (x) against which the base of a vapor-deposited, isosceles triangle area borders in the direction of the blank aperture (22).

15. The fluorescence microscope as recited in Claim 13,
wherein
the vapor-deposition layers are applied neither wholly or in part as connected are, but rather as area elements (30) whose size or distances are selected differently as one moves in the direction of shifting from the blank aperture (22) toward the ends.

16. The fluorescence microscope as recited in Claim 10,
wherein
a two-piece filter draw assembly (20) is provided to affect three excitation bands A, B, D,
a) each filter draw (21) having a circular blank aperture (22) in the center,
b) three selective filters (28,29,31) for the excitation bands A, B, D having a transmission factor that diminishes as the radius increases are arranged as sectors around the center,
c) and separate positioning means (25), with which the filter draws (21) can be shifted independently of each other parallel to the aperture diaphragm plane (24) and or rotated, are assigned to each filter draw (2i j.

17. The fluorescence microscope as recited in Claim 16,
wherein
to achieve a transmission factor that diminishes as the radius increases, the portion of the vapor-deposited area of the filter (28,29,3 1) increases as the radius increases.

18. The fluorescence microscope as recited in Claim 10,
wherein
a two-piece filter draw assembly (20) made of two circular filter draws (21) is provided to affect three excitation bands A, B, D,
a) each filter draw (21) being divided into six sectors covering the illumination beam path and being arranged around its center situated outside the beam path,
b) every second sector being a blank aperture (22) and with one of the three selective filters (28, 29, 31) for the excitation bands A, B,D being situated between each pair,
c) each filter (28, 29,31) exhibiting in its ring sector an increase of the transmission factor in one of the two directions of rotation.
d) and separate positioning means (25) being provided for rotating each filter draw (21) around its center and parallel to the aperture diaphragm plane

19. The fluorescence microscope as recited in Claim 10,
wherein
a two-piece filter draw assembly (20) made of two rectangular filter draws (21) is provided to affect three excitation bands A, B, D,
a) each filter draw (21) having a blank aperture (22) in the center and having at both of its ends two different combinations of two out of three of the selective filters (28, 29, 31) for the excitation bands, both filters being respectively arranged on both ends in such a manner that both filters border each other and the blank aperture (22),
b) the transmission factor of the filters (28,29, 3 1) diminishing in the longitudinal direction of the filter draw (21) moving from the blank aperture (22) toward the ends,
c) and separate positioning means (25) being arranged for shifting the filter draw (21) as well in the longitudinal as in the transversal direction and parallel to the aperture diaphragm plane (24).

20. The fluorescence microscope as recited in Claim 10,
wherein
a three-piece filter draw assembly (20) made of three circular filter draws (21) is provided to affect four excitation bands A, B, C, D,
a) each filter draw (21) having a blank aperture (22) in the center and four selective filters (28,29, 31, 32) situated around said center for the excitation bands as vapor-deposited ring sectors that border each other and have a transmission factor that decreases as the radius increases,
b) and separate positioning means (25) being provided parallel to the aperture diaphragm plane for shifting and/or rotating each filter draw (21).

21. The fluorescence microscope as recited in Claim 10,
wherein
a three-piece filter draw assembly (20) made of three circular filter draws (21) is provided to affect four excitation bands A, B, C, D,
a) each filter draw (21) being divided into eight sectors covering the illumination beam path and being located pivoted around its center, which lies outside the beam path,
b) every second sector being a blank aperture (22) and in between them being situated one of the four selective filters (28,29, 3 1, 32) for the excitation bands,
c) each filter (28,29,31, 32) showing in its ring sector an increase in the transmission factor in one of the two directions of rotation,
d) and separate positioning means (25) being provided for rotating each filter draw (21) around its center and parallel to the aperture diaphragm plane (24).

## Revendications

1. Procédé pour une adaptation individuelle des intensités d'excitation pour un microscope multibande à fluorescence avec plusieurs bandes d'excitation spectralement différentes , lesquelles bandes étant transformés en même temps par un objectif à fluorescence (12) en bandes de fluorescence présentant des intensités de fluorescence , **caractérisé en ce que**
a) l'intensité de fluorescence de chaque bande de fluorescence est déterminée dans une image de microscope et est comparée avec des valeurs de consigne d'intensité qui peuvent être prédéterminées en étant plus grand ou égales à zéro,
b) l'on introduit pour chaque bande d'excitation associée à une intensité de fluorescence différente des valeurs de consigne de l'intensité , un filtre sélectif (23 ; 28 , 29, 31, 32) dans le trajet du rayon d'éclairage , lequel filtre présentant des zones de surface avec un degré de transmission élevé ou basse
c) l'on règle de façon continue les degrés de transmission de chaque filtre (23 ; 28 , 29, 31, 32) dans le trajet des rayons d'éclairage de sorte à régler toutes les intensités de fluorescence par atténuation des bandes d'excitation associées à leurs intensités de consigne d'intensité.

2. Procédé selon la revendication 1, **caractérisé en ce que** les valeurs de consigne pour les différentes intensités de fluorescence sont toutes égales à l'intensité de fluorescence la plus basse.

3. Procédé selon la revendication 1, **caractérisé en ce qu'**au moins une des valeurs de consigne pour les différentes intensités de fluorescence est égale à zéro.

4. Procédé selon la revendication 1, **caractérisé en ce que** les valeurs de consigne sont égales à zéro pour quelques intensités de fluorescence et que les valeurs qui restent sont égales à l'intensité de fluorescence la plus basse.

5. Procédé selon la revendication 1, **caractérisé en ce que** les différentes intensités de fluorescence sont déterminées de façon visuelle.

6. Procédé selon la revendication 1, **caractérisé en ce que** les différentes intensités de fluorescence sont déterminées avec un intensimètre.

7. Procédé selon la revendication 1, **caractérisé en ce que** les différentes intensités de fluorescence sont déterminées au moyen d'une caméra CCD ou d'une caméra vidéo (18) pourvues d'un système d'analyse d'images (19) situé en aval.

8. Procédé selon la revendication 1, **caractérisé en ce que** :
a) l'on détermine continuellement les changements de l'intensité de fluorescence,
b) l'on réajuste toujours les intensités de fluorescence par une adaptation répétée des degrés de transmission des filtres (23 ; 28, 29, 31, 32) étant effectifs dans le trajet des rayons d'éclairage à leurs valeurs de consigne d'intensité de fluorescence.

9. Procédé selon la revendication 2, **caractérisé en ce que**
a) l'on détermine continuellement de façon automatique les changements de l'intensité de fluorescence,
c) l'on maintient toujours de façon automatique les intensités de fluorescence par une adaptation répétée des degrés de transmission des filtres (23 ; 28, 29, 31, 32) étant effectifs dans le trajet des rayons d'éclairage à leurs valeurs de consigne d'intensité de fluorescence.

10. Microscope multibande à fluorescence pour la réalisation du procédé selon la revendication 1, comportant un trajet de rayons d'éclairage avec source de lumière (1), un collecteur (3), plusieurs membres de lentille (4, 6, 8) , un diaphragme d'ouverture (5) , un diaphragme pour le champ d'éclairage (7), un filtre d'excitation (9) pour générer en meme temps plusieurs bandes d 'excitation de différentes longueurs d'onde de lumière ainsi qu'un élément de filtre pour influencer ces bandes d'excitation, et comportant en outre un diviseur de rayons (10) et un objectif (11) qui conduit le rayon d'éclairage sur un objet à fluorescence (12) posé sur la table d'objet (13), lequel objet étant représenté sur un plan d'image intermédiaire via le diviseur de rayon (10), un filtre de sortie et une lentille tubulaire (16), **caractérisé en ce que** :
a) l'on insère tous près de et à coté du diaphragme d'ouverture (5) de façon perpendiculaire comme élément de filtre un set de glissières de filtres (20) composé de glissières de filtres (21 ; 21a, 21b) susceptibles d'être déplacés une à une et étant à des distances tous près l'une de l'autre
b) l'on a prévu sur chaque glissière de filtres (21) un filtre sélectif (23 ; 28, 29, 31, 32) pour chaque bande d'excitation , lequel filtre présentant de zones de surface avec des degrés de transmission élevés et bas
c) la zone de surface avec le degré de transmission le plus bas présente un diamètre minimal égal au diamètre du rayon (x) afin de pouvoir effacer complètement la bande d'excitation,
d) l'on a disposé à coté de chaque filtre (23 ; 28, 29, 31, 32) une ouverture libre (22) avec le diamètre du rayon (x),
e) le degré de transmission de chaque filtre (23 ; 28, 29, 31, 32) diminue en direction du déplacement en s'éloignant de l'ouverture libre (22),
f) l'on associe des moyens de réglage (25) séparés à chaque glissière de filtres (21) au moyen duquel moyen de réglage on peut introduire une zone de surface quelconque de la glissière de filtres (21) dans trajet du rayon d'éclairage .

11. Microscope à fluorescence selon la revendication 10, **caractérisé en ce que** , pour influencer un nombre n de bandes d'excitation
a) le set de glissières de filtres (20) est composé de n-1 glissières de filtres (21) disposés sur n-1 plan de déplacement séparés situés près l'un de l'autre , ledit plan de déplacement étant parallèle par rapport au plan (24) du diaphragme d'ouverture ,
b) chaque glissière de filtres (31) comporte au moins une ouverture libre (22) et n filtres sélectifs (23 ; 28, 29, 31, 32) pour les n bandes d'excitation .

12. Microscope à fluorescence selon la revendication 10, **caractérisé en ce que** , pour influencer deux bandes d'excitation A, D on a prévu une seule glissière de filtre (21) ,
a) laquelle glissière présente sur une de ses extrémités un filtre passe longue (29) pour diminuer l'intensité de la bande d'excitation A présentant des ondes plus courtes,
b) laquelle glissière présente sur une de ses extrémités un filtre courte (28) pour diminuer l'intensité de la bande d'excitation A présentant des ondes plus longues,
c) et laquelle glissière présente entre lesdites extrémités l'ouverture libre (22),
d) et que l'on a installé des moyens de réglage (25) pour déplacer continuellement la glissière de filtres (21) de façon parallèle par rapport au plan du diaphragme d'ouverture (24).

13. Microscope à fluorescence selon la revendication 12, **caractérisé en ce que**
a) la glissière de filtres (21) comporte une plaque en verre (27) translucide rectangulaire sur les extrémités de laquelle sont appliqués en face à face le filtre passe courte (28) et le filtre passe longue (29) en tant que couches déposées par évaporation ,
b) le filtre passe courte ( 28) et le filtre passe longue (29) présentent chaque fois en direction du déplacement à partir de l'ouverture libre (22) vers les extrémités de la glissière de filtres (21) un taux élevé de surface étant soumise à un dépôt par vaporisation et présentant donc une transmission diminuée.

14. Microscope à fluorescence selon la revendication 13, **caractérisé en ce que** les surfaces des deux couches étant soumises à un dépôt par vaporisation présentent sur les extrémités de la glissière (21) de filtres chaque fois la forme d'un rectangle avec une longueur de bord minimale égale au diamètre du rayon (x), auxquels surfaces la base d'une surface étant soumise à un dépôt par vaporisation en forme de triangle isocèle est contiguë en direction de l'ouverture libre (22).

15. Microscope à fluorescence selon la revendication 13, **caractérisé en ce que** les couches étant soumises à un dépôt par vaporisation sont appliquées entièrement ou partiellement non pas en tant que surface continue, mais en tant qu'éléments de surface (30), dont la taille ou la distance sont choisis de façon différente en direction de déplacement à partir de l'ouverture (22) vers les extrémités.

16. Microscope à fluorescence selon la revendication 10, **caractérisé en ce que** , pour influencer trois bandes d'excitation A, B, D , on a prévu un set de glissières de filtres (20) en deux parties composé de deux glissières de filtres annulaires (21), où
a) chaque glissière de filtres (21) présente au milieu une ouverture libre circulaire (21),
b) l'on a disposé autour de ladite ouverture trois filtres sélectifs (28, 29, 31) comme secteur de cercle pour les bandes d'excitation A, B, D avec un degré de transmission diminuant de façon radiale,
c) l'on associe à chaque glissière de filtres (21) des moyens de réglage séparés (25) au moyen desquels un peut faire glisser et / ou tourner les glissières de filtres (21) de façon indépendante l'une par rapport à l'autre parallèlement par rapport au plan du diaphragme d'ouverture

17. Microscope à fluorescence selon la revendication 16, **caractérisé en ce que** la part de la surface étant soumise à un dépôt par vaporisation des filtres (28 , 29, 31) augmente radialement pour obtenir un degré de transmission radialement diminué.

18. Microscope à fluorescence selon la revendication 10, **caractérisé en ce que** l'on a prévu pour influencer trois bandes d'excitation A, B, D , on a prévu un set de glissières de filtres (20) en deux parties composé de deux glissières de filtres annulaires (21), où
a) chaque glissière de filtres (21) est divisée en six secteurs de cercle couvrant le trajet du rayon d'éclairage et est logée de façon à pouvoir tourner autour de son centre situé à l'extérieur du trajet de rayon,
b) chaque deuxième secteur de cercle est une ouverture libre (22) et où un des trois filtres sélectifs (28, 29, 31) pour les bandes d'excitation A, B, D est situé entre ces secteurs,
c) chaque filtre (28, 29, 31) présente à l'intérieur de son secteur de cercle une augmentation du degré de transmission dans une des deux directions de rotation,
d) et des moyens de réglage séparés sont prévus pour faire tourner chaque glissière de filtre (21) autour de son centre et parallèlement par rapport au plan du diaphragme d'ouverture .

19. Microscope à fluorescence selon la revendication 10, **caractérisé en ce que** l'on a prévu pour influencer trois bandes d'excitation A, B, D , on a prévu un set de glissières de filtres (20) en deux parties composé de deux glissières de filtres rectangulaires (21), où
a) chaque glissière de filtre (21) présente au milieu une ouverture libre (22) et sur ses deux extrémités deux différentes combinaisons des deux des trois sélectifs (28, 29, 31) pour les bandes d'excitation, où l'on dispose les deux filtres à chaque fois sur une extrémité de manière l'un à coté de l'autre que les deux filtres sont contigus l'un par rapport à l'autre et par rapport à l'ouverture libre (22),
b) le degré de transmission des filtres (28, 29, 31) diminue en direction longitudinale de la glissière de filtres (21) à partir de l'ouverture libre (22) vers les extrémités,
c) l'on a disposé des moyens de réglage (25) séparés pour déplacer en direction longitudinale et transversale la glissière de filtre (21) parallèlement par rapport au plan du diaphragme d'ouverture (24).

20. Microscope à fluorescence selon la revendication 10, **caractérisé en ce que** l'on a prévu pour influencer quatre bandes d'excitation A, B, C, D , un set de glissières de filtres (20) en trois parties composé de trois glissières de filtres circulaires (21), où
a) chaque glissière de filtre (21) présente au milieu une ouverture libre (22) et autour de cette ouverture quatre filtres sélectifs (28, 29, 31, 32) pour les bandes d'excitation en tant que secteurs annulaires contigus l'un par rapport à l'autre et étant soumis à un dépôt par vaporisation avec des degrés de transmission se diminuants radialement,
b) et où l'on a prévu des moyens de réglage (25) séparés pour faire glisser et / ou tourner chaque glissière de filtre (21) parallèlement par rapport au plan du diaphragme d'ouverture (24).

21. Microscope à fluorescence selon la revendication 10, **caractérisé en ce que** l'on a prévu pour influencer quatre bandes d'excitation A, B, C, D , un set de glissières de filtres (20) en trois parties composé de trois glissières de filtres circulaires (21), où
a) chaque filtre (21) est divisé en 8 secteurs de cercle , couvrant le trajet du rayon d'éclairage , et est logé de façon à pouvoir tourner autour de son centre situé à l'extérieur du trajet de rayon,
b) chaque deuxième secteur de cercle est une ouverture libre (22) et un des 4 filtres sélectifs (28, 29, 31, 32) pour les bandes d'excitation est situé à chaque fois entre ces secteurs ,
c) chaque filtre (28, 29, 31, 32) présente à l'intérieur de son secteur de cercle une augmentation du degré de transmission dans une des deux directions de rotation,
d) et où l'on a prévu des moyens de réglage séparés (25) pour faire tourner chaque glissière de filtre(21) autour de son centre et parallèlement par rapport plan du diaphragme d'ouverture (24).
